# EUROPEAN PATENT APPLICATION

(11) **EP 1 930 647 A2**
(43) Date of publication of application: **11.06.2008**
(21) Application number: 07116243.2
(22) Date of filing: 12.09.2007
(51) Int. Cl.: F17C 5/02

(54) **Portable fluid delivering system and kit**

(30) Priority: 08.12.2006 CN 200610168908
(71) Applicant: Green Hydrotec Inc., Kweishang 333 Tao Yuan (TW)
(72) Inventor: Yeh, Guan Ting, 333, Tao Yuan (TW); Wang, Hang Fu, 333, Tao Yuan (TW); Hung, Chia Yeh, 333, Tao Yuan (TW); Rei, Min Ho, 333, Tao Yuan (TW)
(74) Representative: Viering, Jentschura & Partner

(57) **Abstract**

A portable fluid delivering system comprising a container, a heat source, a flow rate regulating device and a delivery tube is provided. The container has a containing space for a fluid to be delivered, in a liquid state at room temperature. The heat source provides an elevated vapor pressure in the containing space over the fluid to be delivered, whereby the fluid to be delivered is driven at a desirable rate along the delivery tube.

## Description

This application claims the benefit from the priority of Taiwan Patent Application No. 095146115 filed on December 8, 2006, the disclosures of which are incorporated by reference herein in their entirety.

### CROSS-REFERENCES TO RELATED APPLICATIONS

Not applicable.

### BACKGROUND OF THE INVENTION

### Field of the Invention

The present invention relates to a fluid delivering system and a fluid delivering kit. In particular, the invention relates to a fluid delivering system and kit which are adapted to deliver small quantities of fluid. The present invention is especially adapted for micro-equipments, such as fuel cells, for providing raw materials during operation.

### Descriptions of the Related Art

In the chemical industry, fluids are frequently transported. In general, mechanical compression pumps, which have devices with reciprocating, diaphragm pressing, centrifuging or eccentrically rotating, are used as a source of pressure for transporting fluids. The pumps are usually disposed on the upstream end of the tube for elevating the pressure at the upstream end of the tube. The fluid is then delivered to the other end (downstream) of the tube which is at lower pressure. Unfortunately, this kind of system is bulky, noisy and high in energy consumption due to the use of the mechanical compressor pump for raising the pressure and converting electric energy into mechanical energy. Moreover , those pressure pumps always require sealing structures to prevent leakage. Th us, it turns into an issue for using the pumps to provide stable and quantitative delivery of small volume of liquid.

With technique improvements, various application devices have been gradually miniaturized. As a result, fluids need to be delivered in smaller quantities. For example, only a small quantity of methanol or methanol-water is needed for a reaction in a small fuel cell to generate electricity. In this situation, the delivery capability of the conventional mechanical pumps is far beyond the requirements, which is not suitable for delivering fluid in small quantity instead. Furthermore, when high technology products are designed with a lighter weight and slimmer size, the conventional mechanical pumps are too bulky for these products. In addition, conventional mechanical pumps are often fluctuated in volume delivering and energy consuming. Thus, a simple, quiet and low in energy consuming pump which is suitable for delivering small amount of fluids are needed in this field.

Recently, fluid delivering technologies have utilized the capillary action of the fluid to counteract the force of gravity on the fluid. However, the strength of the capillary action is still tied to gravity, surface tension, temperature of the fluid, fluid nature and the transporting environment. Moreover, when the pressure resistance downstream is higher, such as 0.5 to 1 atmospheric pressure or more, the capillary action is insufficient to drive the fluid.

As a result, the development of pumps for overcoming the abovementioned disadvantages of the conventional mechanical pumps in delivering small quantities of fluid becomes a serious challenge. The present invention provides a simple and economical manner to achieve the objective of transporting micro-fluids in a slim device.

### SUMMARY OF THE INVENTION

The primary objective of this invention is to provide a fluid delivering system and a fluid delivering kit by using the vapor pressure of fluid as the source of the driving pressure. Vapor pressure is formed by applying a heat source to the system, so that a small quantity of fluids can be delivered.

Another objective of this invention is to provide a fluid delivering system and a fluid delivering kit without any moving component, and hence to achieve a silent delivery mechanism. An auxiliary liquid can be adequately added if necessary to boost up the vapor pressure to overcome potential back pressure resistance in the downstream or to allow a higher pressure operation in the downstream process. The auxiliary liquid is immiscible with the fluid to be delivered (FTBD). Preferably, the auxiliary liquid possesses a boiling point lower than that of the FTBD. Alternatively, the auxiliary liquid and the FTBD can form an azeotrope. Thus, when the heat source is provided, sufficient vapor pressure at a constant magnitude can be generated in the system to overcome the pressure resistance downstream in the tube and to provide constant pressure differential for delivering the fluid stably and steadily.

In comparison with the conventional mechanical pumps, the fluid delivering system and kit of the present invention are portable, slim, stable, quiet and low in energy consumption.

To achieve the abovementioned objectives, a fluid delivering system comprising a container, a heat source, and a delivery tube is provided. The container has a discharging aperture and a containing space for the FTBD, which is in a liquid state at room temperature. The heat source provides an elevated vapor pressure in the containing space by heating the FTBD. The delivery tube includes two ends in which one end connects to the containing space and the other end opens to the outside of the container. Thus, the FTBD partially vaporized in the container by the heat source forms the elevated vapor pressure which drives the FTBD out of the fluid delivering system through the delivery tube.

The present invention further discloses a fluid delivering kit, which comprises a container, a delivery tube and an auxiliary liquid. The auxiliary liquid is immiscible with the FTBD. The auxiliary liquid also possesses a boiling point lower than that of the FTBD or can form an azeotrope with the FTBD to generate the desired vapor pressure at a lower temperature. The auxiliary liquid can be at least partially vaporized in the containing space to form a stable upstream vapor pressure to drive the FTBD.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1A** is a schematic view illustrating a preferred embodiment of the present invention;
**FIG. 1B** is a diagram showing the stable fluid delivery in a preferred embodiment of the present invention;
**FIG. 2** is a schematic view illustrating another preferred embodiment of the present invention; and
**FIG. 3** is a schematic view illustrating a hydrogen-oxygen fuel cell using the present invention.

### DESCRIPTION OF THE PREFERRED EMBODIMENT

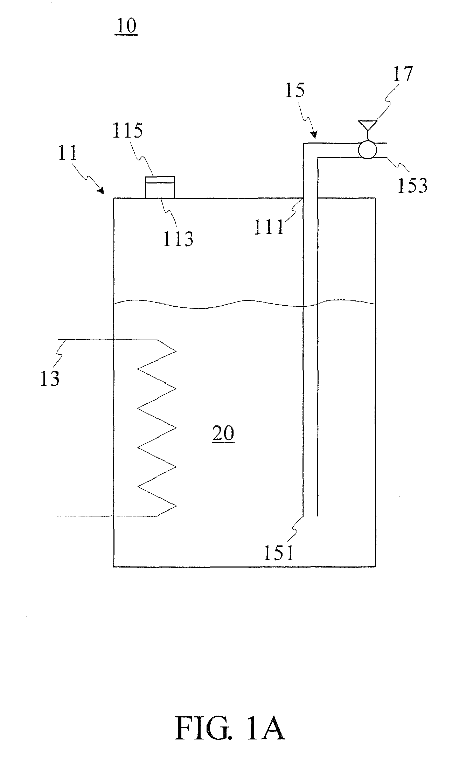

The preferred embodiment of the present invention is shown in **FIG. 1A****.** The fluid delivering system **10** mainly comprises a container **11,** a heat source **13** and a delivery tube **15.** The container **11** has a discharging aperture **111** and a containing space. Preferably, the container **11** is pressure-resistant and corresponds to the operating conditions, such as operation temperature and the various fluids involved. The containing space is used to contain the fluid to be delivered (FTBD) **20** which is going to be delivered. The FTBD 20 is in a liquid state at room temperature. The delivery tube **15** is disposed through the discharging aperture **111.** When the fluid delivering system **10** is in operation, the container **11** is substantially sealed, with the exception of the delivery tube **15** which has a pathway leading out of the system. A portion of the FTBD **20** can be delivered out of the fluid delivering system **10** through the delivery tube **15.**

Specifically, the delivery tube **15** has a first end **151** and a second end **153** opposite to the first end **151.** The first end **151** opens into the bottom of the containing space of the container **11.** The FTBD **20** is guided from the first end **151** (the inlet end) through the delivery tube **15** to the second end **153** (the outlet end). Thus, a pathway is provided for the FTBD **20** to be stably discharged under pressure.

The heat source **13** is used to raise the temperature of the fluid, including the delivered FTBD **20,** in the container **11** for vaporizing the fluid and providing an elevated vapor pressure in the containing space. The vapor pressure can stably drive the FTBD **20** through the both the delivery tube **15** and discharging aperture **111** and out of the fluid delivering system **10.** It is noted that the temperature of the fluid does not to be continuously raised. The heat source only has to maintain the vapor pressure as the source of the driving pressure in the containing space.

In this embodiment, the manner of controlling the flowing speed of fluid delivery not only comprises temperature adjustments, but also uses a control element **17,** such as valves, which is disposed on the delivery tube **15.** The control element **17** is used to adjust the flowing speed of the FTBD **20** into the delivery tube **15,** such as controlling the flowing availability and the flow rate. For example, the control element **17** can be a metering valve, such as a needle valve. When the temperature is raised to a setting temperature, the control element **17** is then actuated to adjust the flow rate. Alternatively, a tubing with a small opening, such as a capillary tube with suitable length, can be used as the delivery tube for simultaneously controlling the flow rate. When the capillary tube is adopted, the control element **17** can be an ON-OFF simple valve.

During the operation, the FTBD **20** is partially vaporized, and a portion of the FTBD **20** in the liquid state is discharged out of the system. Therefore, there are less FTBD **20** in the container **11.** For operation convenience in the system **10,** the FTBD **20** should be supplied into the container **11.** Thus, a filling aperture **113** should be disposed on the container **11.** Furthermore, because the fluid delivering system **10** should be substantially sealed during the operation, a cover **115** is disposed to seal the filling aperture **113** if necessary. For example, the container **11** can communicate with a reservoir (not shown in the figures), which is filled with the fluid, through the filling aperture **113.** Accordingly, the fluid in the reservoir can be fed into the container **11** by using a simple and cheap pump or with the use of gravitation force from being disposed at a higher place. The reservoir can also be detached from the container **11** when the supplement is accomplished, or be replaced with a fresh one with full volume of the fluid, thus to facilitate supplying the FTBD **20** into the container **11.** In this way, the size and cost of the container **11** can be reduced. Since the delivery tube 15 and the filling aperture **113** with the cover **115** are independently disposed on the container **11** as shown in **FIG. 1A****,** the delivery tube **15** can alternatively be disposed on the cover **115** for providing similar benefits. Those skilled in the art should understand without further descriptions.

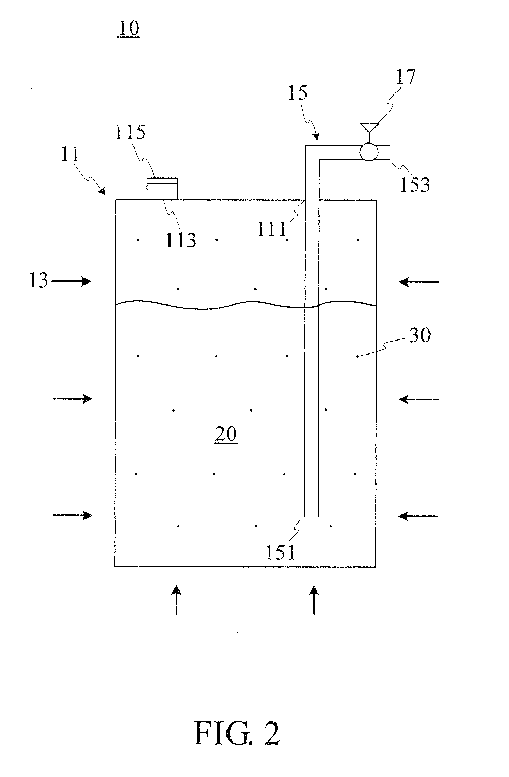

The heat source **13** that is directly or indirectly providing heat to the system can vary. The heat source **13** as shown in **FIG.** 1A directly heats the FTBD **20** whereas the heat source **13** as shown in **FIG. 2** indirectly heats the FTBD **20.** For example, the heat source **13** can use the surplus heat generated from the adjacent heat generating element. More specifically, as indicated by the arrows shown in **FIG.** 2, in an indirect heating manner, the heat source **13** heats the container **11** so as to vaporize the FTBD **20** to generate a vapor pressure in the container **11.** The heat source **13** can be a high-temperature gas, or even a fluid delivering system **10** disposed in the environment with high temperatures for raising the temperature of the FTBD **20.** Thus, the surplus heat or water with high temperature generated from various electric appliances, vehicles or factories, for example, can be reused. Alternatively, the heat source **13** can be selected from a group consisting of thermocouple wires, heating bands, electric heaters, hot baths, hot gases, and combinations thereof, wherein hot gases include the exhausted gases generated during the operation of equipments or the gases generated from chemical reactions. Those skilled in the art can substitute the heat source **13** using any conventional technique that is not limited herein. Thus, the FTBD **20** in the container **11** can be partially vaporized to provide the needed vapor pressure.

In actuality, the heat needed for elevating the vapor pressure is not that much due to the small fluid delivering system **10.** For example, heat from an electric apparatus, chemical reactions or combustion can be used to heat the fluid delivering system **10** of the present invention. The FTBD **20** can be, but is not limited to, water, methanol and/or ethanol. The FTBD **20** can also be gasoline or diesel fuel.

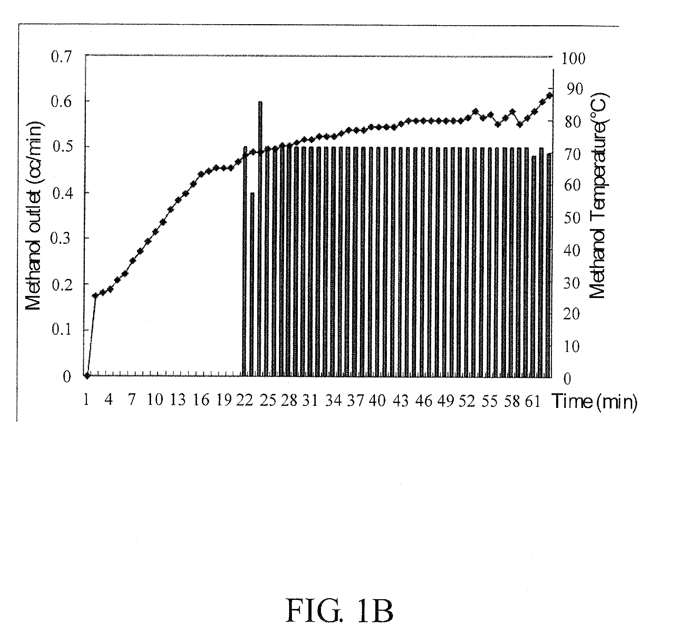

The delivering system of the present invention can be utilized to stably deliver a fluid. A container, having a delivery pipe with a metering valve and containing 100 ml methanol, was disposed in hot baths for being gradually heated, wherein the container was equipped with a thermal couple and a pressure meter for recording the temperature of the methanol and pressure inside the container. The capacity of the container was 160 ml. Referring to **FIG. 1B****,** the curve line presents the temperature of the methanol and the bars presents the flow rate of the discharged methanol. As shown in **FIG. 1B****,** methanol started to be discharged as its temperature was raised above 65 °C. When the temperature of methanol was gradually raised, the vapor pressure inside the container was also elevated. With the adjustment of the metering valve, methanol was delivered by the above described fluid delivering system at a rate of approximately 0.5 c.c./min stably and steadily.

Another preferred embodiment of the present invention is shown in **FIG. 2****.** In addition, the auxiliary liquid **30,** which is immiscible with the FTBD **20,** can be added into the containing space. It is preferred for the auxiliary liquid **30** to possess a boiling point lower than that of the FTBD **20.** When the heat source **13** is applied, the temperatures of the FTBD **20** and the auxiliary liquid **30** are raised. Because the auxiliary liquid **30** possesses a lower boiling point, it will be vaporized prior to the FTBD **20** and will elevate the auxiliary vapor pressure in the containing space for delivering the FTBD **20.** The auxiliary liquid **30** can boost up the vapor pressure to overcome potential back pressure resistance in the downstream or to allow a higher pressure operation in the downstream process. In choosing the auxiliary liquid **30,** the liquid should either have lower boiling point and be immiscible with the FTBD **20** or, preferably, have a gravity smaller than that of the FTBD **20** to float above the FTBD **20** without being delivered along with it. If the gravity of auxiliary liquid **30** is larger than that of the FTBD **20,** the inlet end of the delivery tube **15** should be disposed slightly above the bottom of the container **11.** Another preferred option for the auxiliary liquid **30** can be one that forms an azeotrope with the FTBD **20.** Because the azeotrope has a boiling point lower than that of the FTBD **20** and the auxiliary liquid **30,** it will facilitate the formation of vapor pressure in the container **11** for delivering the FTBD **20.**

For example, in one situation, an auxiliary liquid **30** with high volatility such as pentane, cyclopentane, hexane, and/or cyclohexane can be adopted, while the FTBD **20** is methanol and/or ethanol. In another situation, an auxiliary liquid such as methanol, isopropanol, and/or dichloromethane can be adopted, while the FTBD **20** is gasoline or diesel fuel. Since the gravity of dichloromethane is larger, the first end **151** of the delivery tube **15** should not be touching the bottom of the container **11** so as to prevent the auxiliary liquid **30** from being discharged out of the system. The following examples illustrate the FTBD **20** and the auxiliary liquid 30 forming an azeotrope:

| the fluid to be delivered (FTBD) | the auxiliary liquid | azeotropic temperature (°C) |
|---|---|---|
| water (H₂O) | pentane (C₅H₁₂) | 34.6 |
| methanol (CH₃OH) | pentane (C₅H₁₂) | 30.9 |
| methanol (CH₃OH) | cyclopentane (C₅H₁₀) | 38.8 |
| methanol (CH₃OH) | hexane (C₆H₁₄) | 50.6 |
| methanol (CH₃OH) | cyclohexane (C₆H₁₂) | 54.2 |

For example, when the FTBD **20** is methanol and the auxiliary liquid **30** is pentamethylene, the azeotropic temperature can be lowered to 38.8°C. Similarly, when the FT BD **20** is methanol and the auxiliary liquid **30** is pentane, the azeotropic temperature can be lowered to 30.9°C. By using the aforesaid azeotropic temperatures that are close to room temperature and are more applicable by applying a general heating manner, the practice threshold can be effectively lowered.

In actuality, due to the slim fluid delivering system **10** of the present invention, only a few of the auxiliary liquid **30** is needed in the containing space of the container **11.** In comparison with the quantity of the FTBD **20** in the container **11,** the quantity of the added auxiliary liquid **30** is relatively low and does not effect the concentration of the FTBD **20** substantially. For example, assume that a fluid delivering system **10** has a container **11** with a 1 litre containing space, the FTBD **20** is methanol, the auxiliary liquid **30** is pentane (C₅H₁₂), and the azeotrope is vaporized to generate a pressure of 2 atmA in the container **11.** The azeotrope vapor should approximately be 0.08 mole to fill the containing space at the boiling temperature of the azeotrope (i.e. 30.9 °C) according to the ideal gas equation (PV = nRT). Because methanol is 14.5% of the azeotrope and pentane is 85.5% of the azeotrope, i.e. 0.0684 moles, only about 5 grams of pentane is enough. Furthermore, the vaporized methanol is much less than the total methanol in the container **11,** and thus, the contents of the FTBD **20** are not affected when it is mixed. If the containing space is 1 litre and with the consideration that the vapor pressure needs to be higher than 2 absolute atmospheres for delivering the FTBD and a portion of unvaporized auxiliary liquid **30** is inevitably discharged out of the system, the added pentane should approximately be 5 to 10 grams. With respect to a system with the containing space filled with FTBD, pentane is only a very small percentage of the discharged fluid. Furthermore, the formed azeotrope will contain less than 0.37 grams of methanol. In other words, most of the initially added methanol will be no longer remaining in the system.

Other implements derived from the present invention should be part of the general concept of the present invention. For example, another preferred embodiment of the present invention disclosed herein is a fluid delivering kit. The fluid delivering kit comprises the container **11,** the delivery tube **15** and the auxiliary liquid **30** described hereinbefore. Upon assembling the parts, the kit can be used to deliver fluids. When the user starts to operate this fluid delivering kit, the auxiliary liquid **30** can be added into the containing space before, simultaneously, or after the FTBD **20** is added into the containing space. After the auxiliary liquid **30** is at least partially vaporized by heating, the auxiliary vapor pressure can be formed in the containing space for providing at least a partial driving pressure to deliver the FTBD.

Similarly, the fluid delivering kit disclosed in this embodiment can also comprise the abovementioned control element **17,** filling aperture **113** and cover **115** which are not further described herein.

For verifying the effects of the present invention, a simple experiment was performed as follows. A pot made of stainless steel with an outer diameter of 60 mm, and a height of 75 mm was filled with 120 milliliter of water and was be disposed in a sink as a hot bath. The pot was also disposed with a pressure gauge, a thermometer, and a 1/16 inch capillary outlet for measuring fluid delivery.

First, the system was heated from room temperature. The measured temperature, pressure and flowing variation was shown in **Table 1.** As the result, when the temperature was at 88 °C, the pressure was at 1.7 atmA. At the same time, the fluid flow rate from the pot was about 0.32 grams per minute.

Moreover, another similar experiment was conducted. This time, the pot was filled with 120 milliliter of water, with 1 milliliter of pentane as the auxiliary liquid. Similarly, the system was heated from room temperature with being measured in temperature, pressure and flowing variation. As a result, when the water temperature was 46 °C, the vapor pressure was 1.7 atmA. The fluid flowing rate from the pot was about 0.33 grams per minute. Likewise, when the water temperature was at 70 degrees centigrade, the vapor pressure was 2.5 atmA and the fluid flowing rate was about 0.79 grams per minute. In all cases, a micro-delivery needs not a very high temperature, and the delivering efficiency can be enhanced with the addition of little amount of adequate auxiliary liquid.

**Table 1**

| water (120 c.c.) | | | water (120c.c.)+ pentane (1cc) | | |
|---|---|---|---|---|---|
| temperature (°C) | pressure (atmA) | flow rate (g/min) | temperature (°C) | pressure (atmA) | flow rate (g/min) |
| 40 | 1.0 | - | 29 | 1.1 | - |
| 55 | 1.1 | - | 33 | 1.3 | - |
| 61 | 1.2 | - | 36 | 1.5 | - |
| 68 | 1.3 | - | 46 | 1.7 | 0.33 |
| 72 | 1.4 | - | 50 | 1.9 | - |
| 75 | 1.5 | - | 56 | 2.1 | 0.60 |
| 83 | 1.6 | - | 63 | 2.3 | - |
| 88 | 1.7 | 0.32 | 70 | 2.5 | 0.79 |

According to the abovementioned fluid delivering system, kit and method for enhancing the fluid delivery, either the vapor pressure elevated by the fluid itself or a vapor pressure generated from an auxiliary liquid added thereto can drive the FTBD after the fluid is heated. The present invention is especially suitable for deliver fluids in micro-quantities. The present invention can deliver a micro-quantity of FTBD with the use of heat available from the environment and without the need of an additional pump. The product of the present invention is portable, slim, consumes little energy and is suitable for many applications in liquid delivery.

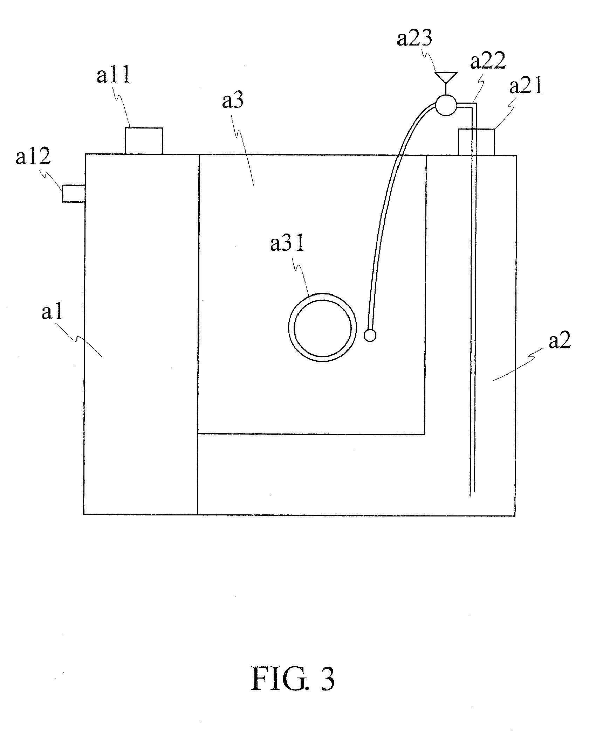

**FIG. 3** shows the structure of a hydrogen generator of a hydrogen fuel cell applying the present invention for delivering methanol-water to generate hydrogen. In **FIG. 3****,** a methanol container **a1**, a methanol-water container **a2,** and a reaction zone **a3** are illustrated. The methanol container **a1** further comprises a methanol filling assembly (including a filling aperture and a cover), while the methanol-water container **a2** further comprises a methanol-water filling assembly (including a filling aperture and a cover). A methanol-water delivering tube **a22** is disposed to connect the methanol-water container **a2** and the reaction zone **a3.** A needle valve **a23** is further disposed on the methanol-water delivering tube **a22.**

In this embodiment, air can be introduced into the methanol container **a1** through the air inlet **a12** by a micro-compressor or a blower (not shown in the figures). Subsequently, methanol is carried into the oxidation catalyst **a31** to perform an oxidation-combustion reaction. The heat generated from the reaction can not only raise the temperature of the reaction zone **a3** but also raise the temperature of the methanol-water container **a2.** Thus, vapor pressure is elevated in the methanol-water container **a2** to deliver the methanol-water from the methanol-water container **a2** to the reaction zone **a3** through the methanol-water delivering tube **a22** and the needle valve **a23.** The methanol-water then performs a steam reforming reaction in the reaction zone **a3,** and generates hydrogen for the fuel cell. When the hydrogen fuel cell is applied to electric products, such as laptops, the abovementioned micro-compressor or the blower can use the existing facilities in the electric products. Thus, a small quantity of methanol-water can be stably delivered without additional pumps.

The performing results of the assembly shown in **FIG. 3** are illustrated as below. For portability, the system was designed in a size of only 1000 cubic centimeters, i.e., of the same volume as a cube with 10 cm edges. Heat generated from the methanol oxidation-combustion raised the temperature of the reaction zone **a3** from room temperature to 260 degrees centigrade in approximate 5 minutes, and raised the temperature of methanol-water container **a2** as well. When the temperature of the reaction zone **a3** reached the reaction temperature, the needle valve **a23** was adjusted to control the flow rate of the methanol-water to the reaction zone **a3** for generating hydrogen.
1. Temperature raising period in the reaction zone: 5 minutes (to 280°C);
2. Methanol-water consumption: 0.36 gram/minute;
3. Methanol consumption in initial: 0.05 gram/minute;
4. Initial temperature of the methanol-water container: 47°C;
5. Operating temperature and pressure of the methanol-water container: 62°C, 7psig;
6. Water/methanol (mole ratio) in the methanol-water container = 1.2
7. Yield of hydrogen: 30 litre/hour
8. Product combination in the reaction zone: as shown in **Table 2.**

**Table 2**

| temperature(°C) | methanol-water converting ratio (%) | reforming products composition (%) | | |
|---|---|---|---|---|
| | | H₂ | CO | CO₂ |
| 280 | 100% | 75.17 | 0.89 | 23.94 |
| 290 | 100% | 73.99 | 1.43 | 24.59 |

The above disclosure is related to the detailed technical contents and inventive features of the present invention. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A fluid delivering system, comprising:
a container, having a discharging aperture and a containing space for a fluid to be delivered, which is in liquid state at room temperature;
a heat source for providing an elevated vapor pressure in the containing space by heating the fluid to be delivered; and
a delivery tube connecting to the container at the aperture, including a first end open to the containing space and a second end open to the outside of the container;
whereby the elevated vapor pressure drives the fluid to be delivered out the fluid delivering system through the delivery tube.

2. The fluid delivering system as claimed in claim 1, further comprising a control element disposed between the first end and the second end of the delivery tube, to control the fluid delivery at the second end.

3. The fluid delivering system as claimed in claim 2, wherein the control element is a metering valve.

4. The fluid delivering system as claimed in claim 2, wherein the delivery tube is a capillary tube and the control element is a simple valve.

5. The fluid delivering system as claimed in claim 1, wherein the container further comprises a filling aperture for introducing the fluid to be delivered into the container space.

6. The fluid delivering system as claimed in claim 5, further comprising a cover fitting with the filling aperture, whereby the cover seals with the filling aperture during the operation of the fluid delivering system.

7. The fluid delivering system as claimed in claim 1, wherein the container communicates with a reservoir through the filling aperture and the reservoir contains the fluid to be delivered.

8. The fluid delivering system as claimed in claim 1, wherein the heat source is selected from a group consisting of thermocouple wire, heating band, electric heater, hot bath, hot gas, and combinations thereof.

9. The fluid delivering system as claimed in claim 8, wherein the heat source is a hot vapor from a chemical reaction.

10. The fluid delivering system as claimed in claim 1, wherein the fluid to be delivered is selected from a group consisting of water, methanol, ethanol and combinations thereof.

11. The fluid delivering system as claimed in claim 1, further comprising an auxiliary liquid in the containing space, wherein the auxiliary liquid is immiscible with the fluid to be delivered and can be evaporated to provide an auxiliary vapor pressure in the containing space.

12. The fluid delivering system as claimed in claim 11, wherein the auxiliary liquid possesses a boiling point lower than that of the fluid to be delivered.

13. The fluid delivering system as claimed in claim 11, wherein the auxiliary liquid and the fluid to be delivered can form into an azeotrope.

14. The fluid delivering system as claimed in claim 11, wherein the fluid to be delivered is selected from a group consisting of water, methanol, ethanol and combinations thereof, and the auxiliary liquid is selected from a group consisting of pentane, cyclopentane, hexane, cyclohexane, and combinations thereof.

15. The fluid delivering system as claimed in claim 11, wherein the fluid to be delivered is gasoline or diesel fuel, and the auxiliary liquid is selected from a group consisting of methanol, isopropanol, dichloromethane, and combinations thereof.

16. A fluid delivering kit, comprising:
a container, having a discharging aperture and a containing space;
a delivery tube connecting to the container at the discharging aperture, including a first end open to the containing space and a second end open to the outside of the container; and
an auxiliary liquid, possessing a boiling point lower than that of a fluid to be delivered and being immiscible with the fluid to be delivered;
wherein the auxiliary liquid provides an auxiliary vapor pressure in the containing space during the operation of the fluid delivering kit.

17. The fluid delivering kit as claimed in claim 16, wherein the boiling point of the auxiliary liquid is relatively low corresponding to the fluid to be delivered.

18. The fluid delivering kit as claimed in claim 16, wherein the auxiliary liquid and the fluid to be delivered can form into an azeotrope.

19. The fluid delivering kit as claimed in claim 16, further comprising a control element disposed between the first end and the second end of the delivery tube.

20. The fluid delivering kit as claimed in claim 19, wherein the control element is a metering valve.

21. The fluid delivering kit as claimed in claim 19, wherein the delivery tube is a capillary and the control element is a simple valve.

22. The fluid delivering kit as claimed in claim 16, wherein the container further comprises a filling aperture and a cover, wherein the filling aperture is for introducing the fluid to be delivered into the containing space and the cover fits with the filling aperture.

23. The fluid delivering kit as claimed in claim 22, wherein the container communicates with a reservoir through the filling aperture and the reservoir contains the fluid to be delivered.

24. The fluid delivering kit as claimed in claim 16, wherein the fluid to be delivered is selected from a group consisting of water, methanol, ethanol and combinations thereof, and the auxiliary liquid is selected from a group consisting of pentane, cyclopentane, hexane, cyclohexane, and combinations thereof.

25. The fluid delivering kit as claimed in claim 16, wherein the fluid to be delivered is gasoline or diesel fuel, and the auxiliary liquid is selected from a group consisting of methanol, isopropanol, dichloromethane, and combinations thereof.
